(19) Europäisches Patentamt
European Patent Office
Office européen des brevets

(11) **EP 1 983 226 A1**

(12) **DEMANDE DE BREVET EUROPEEN**

(43) Date de publication:
**22.10.2008 Bulletin 2008/43**

(51) Int Cl.:
***F16H 61/02*** *(2006.01)*

(21) Numéro de dépôt: **08305095.5**

(22) Date de dépôt: **10.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **17.04.2007 FR 0754522**

(71) Demandeur: **PEUGEOT CITROËN AUTOMOBILES S.A.**
**78140 Vélizy Villacoublay (FR)**

(72) Inventeur: **Schaeffer, Eric**
**92250 La Garenne Colombes (FR)**

(54) **Procédé pour homogénéiser les temps de changement de rapport d'une boîte de vitesses**

(57) L'invention concerne un procédé pour homogénéiser les temps de changement de rapport d'une boîte (4) de vitesses pour passer d'un rapport (RI) initial à un rapport (RF) final. Dans l'invention, lors de la phase de synchronisation du crabot (15) avec le rapport final (RF), on applique un effort (Fsyn) de synchronisation au synchroniseur (18) du rapport final. Cet effort (Fsyn) de syn-chronisation est fonction d'un temps (Ts) de synchroni-sation fixé, ce temps (Ts) de synchronisation étant fixé en fonction des conditions du changement de rapport de vitesse.

Fig. 2

**Description**

L'invention concerne un procédé pour homogénéiser les temps de changement de rapport d'une boîte de vitesses. L'invention a notamment pour but d'augmenter l'agrément de conduite lors des changements de rapport de vitesse. L'invention trouve une application particulièrement avantageuse avec les boîtes de vitesses pilotées comportant des actionneurs assurant le déplacement des crabots de la boîte de vitesses.

Les véhicules connus comportent une chaîne de traction formée par un dispositif de propulsion (formé par un moteur thermique et/ou une machine électrique), un embrayage, et une boîte de vitesses qui entraîne les roues du véhicule. L'embrayage est relié d'une part au dispositif de propulsion et d'autre part à la boîte de vitesses, elle-même reliée aux roues.

Plus précisément, la boîte de vitesses comporte un arbre primaire relié à l'embrayage et un arbre secondaire relié aux roues du véhicule, ces deux arbres étant reliés entre eux par l'intermédiaire d'engrenages formant les rapports de vitesse.

Chaque engrenage comporte une roue reliée à un des arbres et un pignon fou monté sur l'autre arbre. Des crabots munis chacun d'un synchroniseur sont utilisés pour lier sélectivement les pignons fous à l'arbre sur lequel ils sont montés afin d'assurer un passage de vitesse.

A cet effet, le crabot est lié en rotation à son arbre mais est mobile axialement pour permettre l'accrochage avec le pignon fou. On parle de crabotage lorsque le crabot entre en coopération avec le pignon fou de sorte qu'un rapport de vitesse est engagé, et de décrabotage lorsque le crabot se dégage du pignon fou de sorte que le rapport est désengagé.

Les synchroniseurs montés sur les crabots ont pour rôle d'amener le crabot et le pignon fou à engrener à des vitesses de rotation identiques avant de réaliser le crabotage. En effet, lors d'un changement de rapport de vitesse, le crabot est lié à l'arbre secondaire qui est relié aux roues, tandis que le pignon fou du rapport à engager est relié à l'arbre primaire (ou inversement). Or l'arbre primaire et l'arbre secondaire tournent à des vitesses différentes. Le synchroniseur permet alors de synchroniser le régime de l'arbre primaire avec celui du rapport à engager.

Le temps de passage de rapport d'une boîte de vitesses pilotée dépend des performances de l'actionneur de passage et des caractéristiques des composants de la mécanique interne de la boîte de vitesses.

Le changement de rapport est composé de trois phases principales : le désengagement du rapport initial, la synchronisation de l'arbre primaire avec le rapport final et l'engagement de ce rapport final.

Le dégagement et l'engagement sont généralement pilotés en boucle fermée sur la position de l'actionneur qui déplace le crabot. Le temps de déplacement du crabot est de préférence le plus court possible et il est constant quel que soit le rapport impliqué.

Par ailleurs, la synchronisation avec le rapport final est pilotée en effort. En effet, suivant la sportivité demandée par le conducteur et/ou le mode automatique, l'actionneur applique un effort plus ou moins important pour garantir un temps de synchronisation optimal.

Le document FR-2799256 décrit ainsi la possibilité de sélectionner l'intervalle de temps de synchronisation selon la nature du changement de rapport de vitesses (montée ou descente) et le mode de conduite (sportif ou économique).

Le pilotage des synchroniseurs implique une calibration « à la main » par un technicien pour chaque adaptation de la boîte de vitesses. En effet, l'effort à appliquer pour garantir un temps de synchronisation dépend de l'écart de régime entre rapport initial et final mais également des inerties des pièces tournantes impliquées dans le changement de rapport.

Cette calibration induit des écarts sensibles de temps de synchronisation, donc de temps de passage de rapports entre les différents changements de rapport, même à iso-régime moteur initial.

L'invention se propose de résoudre ce problème d'écart de temps de changement de rapport dû à la calibration.

A cet effet, dans l'invention, on rend les temps de synchronisation homogènes suivant des conditions de passage de rapports bien identifiées, par exemple en mode automatique.

L'invention permet ainsi de rapprocher le ressenti du comportement véhicule de celui d'une transmission automatique.

A cet effet, à l'instant de la demande de changement de rapport, par action du conducteur et/ou par le mode automatique de changement de rapport de vitesse, on mémorise les conditions de changement de rapport, telles que le régime de l'arbre primaire, le régime des roues, l'enfoncement de la pédale d'accélérateur, et on calcule l'écart de régime entre le rapport initial et le rapport final.

On établit alors la correspondance entre ces conditions de changement de rapport et un temps de changement de rapport, à l'aide d'une table de correspondance. Cette table, contenue dans une mémoire du calculateur de la boîte de vitesses, associe des temps de synchronisation à des conditions de changement de rapport identifiées.

En fonction du temps associé aux conditions du changement de rapport, on en déduit la consigne de l'effort de synchronisation à appliquer au synchroniseur permettant de respecter ce temps de synchronisation.

L'invention concerne donc un procédé pour homogénéiser les temps de changement de rapport d'une boîte de vitesses pour passer d'un rapport initial à un rapport final, ce procédé étant mis en oeuvre avec une boîte de vitesses d'un véhicule, notamment d'un véhicule automobile, comportant :

- un arbre primaire relié à un dispositif de propulsion via un embrayage et un arbre secondaire relié aux roues du véhicule,
- l'arbre primaire et l'arbre secondaire étant reliés entre eux par l'intermédiaire d'un premier engrenage formant le rapport initial et d'un deuxième engrenage formant le rapport final, et
- un crabot muni d'un synchroniseur associé au rapport final,

caractérisé en ce que lors de la phase de synchronisation du crabot avec le rapport final,

- on applique un effort de synchronisation au synchroniseur du rapport final,
- cet effort de synchronisation étant fonction d'un temps de synchronisation prédéterminé, ce temps de synchronisation étant prédéterminé en fonction des conditions du changement de rapport.

Selon une mise en oeuvre, le temps de synchronisation est mémorisé à l'intérieur d'une table établissant la correspondance entre des temps de synchronisation prédéterminés et des conditions de changement de rapport identifiées, ce temps étant sélectionné dans le tableau en fonction des conditions du changement de rapport du véhicule pour passer du rapport initial au rapport final.

Selon une mise en oeuvre, les conditions de changement de rapport correspondent aux régimes de changement de rapport ou à l'enfoncement de la pédale d'accélérateur.

Selon une mise en oeuvre, l'effort de synchronisation présente une rampe de montée en effort jusqu'à un effort de synchronisation maximal, l'effort de synchronisation maximal étant maintenu jusqu'à ce que le régime du rapport final soit atteint par l'arbre primaire.

Selon une mise en oeuvre l'effort (FsynMax) de synchronisation maximal vaut :

$$FsynMax = (-B + sqrt((B^2) - 4*A*C)/2A),$$

avec

A = -b/(2*a),

B = Ts*b

C = +Wdiff*Jap pour les passages descendants,

C = -Wdiff*Jap pour les passages montants,

Wdiff étant l'écart de régime de l'arbre primaire entre le rapport initial et le rapport final,

Ts étant le temps de synchronisation fixé,

Jap étant l'inertie des pièces tournantes soumises au couple de synchronisation, Jap étant calculée en fonction du rapport final à synchroniser,

b étant le couple de synchronisation par unité d'effort qui dépend des caractéristiques géométriques du synchroniseur,

a étant la pente de montée en effort, la valeur de a étant figée et est fonction de la capacité du synchroniseur et de son actionneur.

Selon une mise en oeuvre, pour calculer l'écart de régime entre le rapport initial et le rapport final :

- à l'instant de la demande du changement de rapport, on mesure le régime de l'arbre primaire et le régime de l'arbre secondaire, et
- à partir des rapports de démultiplication du rapport initial et du rapport final, on calcule l'écart de régime entre ces rapports.

Selon une mise en oeuvre, le changement de rapport est commandé par le conducteur et/ou par le mode automatique de changement de rapport.

L'invention sera mieux comprise à la lecture de la description qui suit et à l'examen des figures qui l'accompagnent. Ces figures ne sont données qu'à titre illustratif mais nullement limitatif de l'invention. Elles montrent :

- figure 1 : une représentation schématique d'une chaîne de traction de véhicule mettant en oeuvre le procédé selon l'invention ;
- figure 2 : une représentation schématique d'une boîte de vitesses de la chaîne de traction du véhicule de la figure 1 ;

- figure 3 : un diagramme de mise en oeuvre du procédé selon l'invention ;
- figure 4 : des représentations graphiques montrant respectivement l'évolution du régime de l'arbre primaire et de l'effort de consigne appliqué au synchroniseur lors d'un changement de rapport de vitesse.

Les éléments identiques conservent la même référence d'une figure à l'autre.

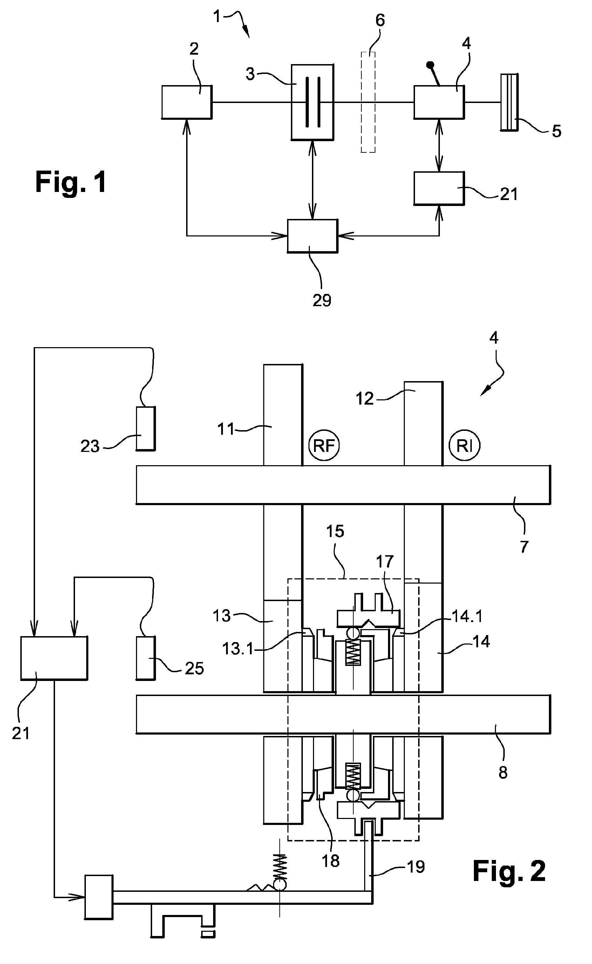

La figure 1 montre un véhicule 1 comportant une chaîne de traction formée par un moteur 2 thermique, un embrayage 3, une boîte 4 de vitesses et des roues 5 du véhicule. L'embrayage 3 est relié d'une part au moteur 2 thermique et d'autre part à la boîte 4 de vitesses. Cette boîte 4 de vitesses est reliée aux roues 5 du véhicule.

En variante, lorsque le véhicule 1 est un véhicule hybride, la chaîne de traction est complétée par une machine 6 électrique positionnée sur l'arbre d'entrée de la boîte 4 de vitesse entre l'embrayage 3 et la boîte 4 de vitesses.

La figure 2 montre une vue détaillée de la boîte 4 de vitesses.

En référence aux figures 1 et 2, la boîte de vitesses comporte un arbre 7 primaire relié à l'embrayage 3 et un arbre 8 secondaire relié aux roues 5. Ces deux arbres 7 et 8 sont reliés entre eux par l'intermédiaire d'engrenages formant les rapports de vitesse RI et RF (ici seulement deux engrenages sont représentés pour faciliter la compréhension).

Le rapport initial RI et le rapport final RF sont respectivement formés chacun par une roue 11, 12 entraînée par l'arbre 7 primaire et un pignon fou 13, 14 entraîné par l'arbre 8 secondaire.

Un crabot 15 à couronne est monté sur l'arbre 8 secondaire entre les deux engrenages. Le crabot 15 est lié en rotation à l'arbre 8 et comporte une couronne 17 mobile axialement. Cette couronne 17 comporte des dents sur sa périphérie destinées à entrer en coopération avec des dents 13.1, 14.1 des pignons fous 13, 14.

Lors d'un crabotage, la couronne 17 mobile se déplace vers le pignon fou du rapport à engager et engrène avec lui, de sorte que le pignon fou se lie en rotation à l'arbre 8. Lors d'un décrabotage, la couronne 17 mobile se dégage du pignon fou, de sorte que ce pignon fou n'est plus lié en rotation avec l'arbre 8.

Le crabot 15 est également muni d'un synchroniseur 18 qui a pour rôle d'amener le crabot 15 et le pignon 13 ou 14 à engrener à des vitesses de rotation identiques avant de réaliser le crabotage.

Pour assurer les déplacements axiaux du crabot 15, la boîte 4 de vitesses comporte un actionneur 19 commandé par le calculateur 21 de boîte de vitesses. Le calculateur 21 commande également l'ouverture et la fermeture de l'embrayage 3.

En outre, un premier capteur 23 de vitesse mesurant la vitesse de rotation de l'arbre 7 primaire et un deuxième capteur 25 de vitesse mesurant la vitesse de rotation de l'arbre 8 secondaire sont reliés au calculateur 21.

Le véhicule 1 comporte également un superviseur 29 de chaîne de traction qui commande le moteur 2 thermique, l'embrayage 3 et le calculateur 21 de boîte de vitesses.

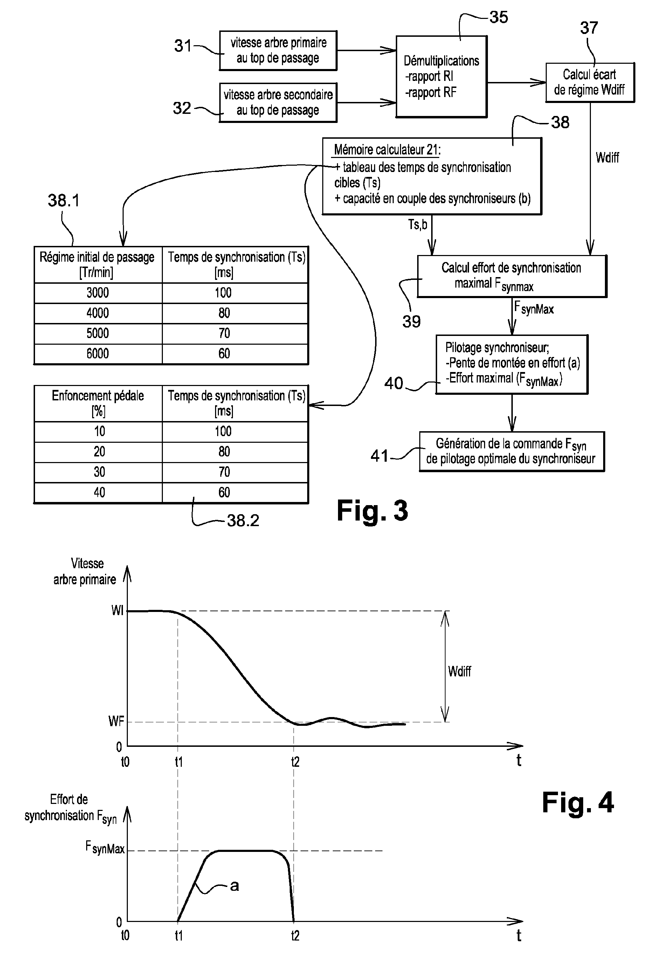

En référence à la figure 3, lorsque le rapport RI initial est engagé à l'instant t0, la couronne 17 est crabotée avec le pignon fou 14, tandis que le pignon 13 est monté fou sur l'arbre 8 secondaire. Comme représenté sur la figure 4, l'arbre 7 primaire présente alors une vitesse de rotation WI.

Lorsqu'un changement de rapport de vitesse est commandé à l'instant t1 (par le conducteur ou de manière automatique), le capteur 23 mesure, dans une étape 31, la vitesse de rotation de l'arbre 7 primaire. Et le capteur 25 mesure, dans une étape 32, la vitesse de rotation de l'arbre 8 secondaire. Le rapport RI est désengagé au moment où le changement de rapport est demandé.

En fonction des rapports de démultiplication du rapport RI initial et du rapport RF final (indiqués par les lois 35 de passage de rapport permettant de connaître le rapport RF final), on en déduit, dans une étape 37, l'écart Wdiff de régime entre le régime initial WI de l'arbre 7 primaire au moment du désengagement et le régime cible WF de l'arbre 7 primaire. Cet écart Wdiff correspond à l'écart de régime entre le régime du crabot 15 et le régime du pignon 13 du rapport final RF à engrener.

La valeur Wdiff est appliquée en entrée du bloc 39 de calcul de l'effort FsynMax de synchronisation maximal à appliquer au synchroniseur 18.

Par ailleurs, le calculateur 21 de boîte de vitesses comprend dans sa mémoire 38 une table associant des temps Ts de synchronisation prédéterminés à des conditions de changement de rapport. Ces temps Ts de synchronisation dépendent de la volonté du conducteur, de la vitesse du véhicule, de la sportivité souhaitée par le conducteur, du régime moteur, des lois de changement de rapport du véhicule...

Les tables 38.1 et 38.2 indiquent respectivement des exemples de temps de synchronisation Ts en fonction du régime initial de passage, et de l'enfoncement de la pédale d'accélérateur.

En fonction des conditions de changement du rapport de vitesse pour passer de RI à RF, une valeur de temps Ts prédéterminée est transmise au bloc de calcul 39.

Par ailleurs, la mémoire 38 contient la capacité en couple b par unité d'effort de chaque synchroniseur (couple de synchronisation généré pour 1 N d'effort) qui dépend des caractéristiques géométriques des synchroniseurs de la boîte 4 de vitesses. En particulier, la capacité propre à chaque synchroniseur dépend du diamètre du synchroniseur et de l'angle de son cône de frottement. La valeur de b associée au synchroniseur 18 sollicité pour le changement de rapport de RI vers RF est transmise au bloc 39.



A partir de l'expression suivante :

$$Ts = \frac{Wdiff}{F\max \cdot a} \cdot Jap + \frac{1}{2} \cdot \frac{F\max \cdot a}{a \cdot b}$$

a étant la rampe de monté en effort. La valeur de a est figée et est fonction de la capacité de l'actionneur et du synchroniseur. Dans un exemple a vaut 14000N/m.

FsynMax étant l'effort maximal de synchronisation à appliquer à l'actionneur,

Wdiff étant la vitesse différentielle au synchroniseur calculée et transmise par le bloc 37,

b étant la capacité en couple par unité d'effort du synchroniseur 18 transmise par la mémoire 38,

Jap étant l'inertie connue des pièces tournantes soumises à l'effort de synchronisation, Jap étant calculée en fonction du rapport RF à synchroniser,

On en déduit, via le bloc 39, l'effort FsynMax maximal à appliquer à l'actionneur du synchroniseur 18 :

$$FsynMax = (-B + sqrt((B\^2) - 4*A*C)/2A),$$

avec

A = -b/(2*a)

B = Ts*b

C = +Wdiff*Jap pour les passages descendants par exemple de la quatrième vers la troisième,

C = -Wdiff*Jap pour les passages montants par exemple de la première vers la deuxième,

sqrt étant la fonction radical.

Dans une étape 40, on paramètre alors le pilotage du synchroniseur 18, de sorte qu'un effort Fsyn de consigne ayant l'allure de la courbe représentée à la figure 4 soit appliqué par l'actionneur du synchroniseur 18. Dans cette étape 40, le calculateur 21 commande l'actionneur du synchroniseur 18, de sorte que le temps Ts de synchronisation déterminé à l'aide du tableau soit respecté.

A cet effet, Fsyn présente une rampe a de montée en effort jusqu'à l'effort maximal FsynMax, FsynMax étant maintenu jusqu'à l'instant t2 auquel la synchronisation avec le rapport RF est terminée.

Entre t1 et t2, la vitesse du crabot 15 et la vitesse du pignon 13 fou du rapport RF final se synchronisent alors entre elles. Comme le passage du rapport RI initial au rapport RF final correspond ici à un passage montant, la synchronisation du crabot 15 avec le rapport RF final engendre une diminution du régime de l'arbre 7 primaire.

A l'instant t2, lorsque le régime de l'arbre 7 primaire a atteint le régime Wf du rapport final, le rapport final RF est craboté et aucun couple n'est appliqué au synchroniseur 18.

Ainsi, à iso conditions de passage de rapport, un passage de la première vers la seconde ou un passage de la cinquième vers la sixième auront le même temps de synchronisation et donc le même temps de changement de rapport de vitesse.

En variante, pour un passage descendant, la synchronisation du crabot 15 avec le rapport RF engendre une augmentation du régime de l'arbre 7 primaire.

**Revendications**

1. Pocédé pour homogénéiser les temps de changement de rapport d'une boîte (4) de vitesses pour passer d'un rapport (RI) initial à un rapport (RF) final, ce procédé étant mis en oeuvre avec une boîte (4) de vitesses d'un véhicule, notamment d'un véhicule automobile, comportant :

   - un arbre (7) primaire relié à un dispositif (2) de propulsion via un embrayage (3) et un arbre (8) secondaire relié aux roues (5) du véhicule,
   - l'arbre primaire (7) et l'arbre (8) secondaire étant reliés entre eux par l'intermédiaire d'un premier engrenage formant le rapport initial (RI) et d'un deuxième engrenage formant le rapport final (RF), et
   - un crabot (15) muni d'un synchroniseur (18) associé au rapport final,

   **caractérisé en ce que** lors de la phase de synchronisation du crabot (15) avec le rapport final (RF),

- on applique un effort (Fsyn) de synchronisation au synchroniseur (18) du rapport final,
- cet effort (Fsyn) de synchronisation étant fonction d'un temps (Ts) de synchronisation prédéterminé, ce temps (Ts) de synchronisation étant prédéterminé en fonction des conditions du changement de rapport,
- l'effort (Fsyn) de synchronisation présentant une rampe (a) de montée en effort jusqu'à un effort (FsynMax) de synchronisation maximal, l'effort (FsynMax) de synchronisation maximal étant maintenu jusqu'à ce que le régime (Wf) du rapport final soit atteint par l'arbre (8) primaire,
- l'effort (FsynMax) de synchronisation maximal valant :

$$FsynMax = (-B+sqrt((B^2)-4*A*C)/2A),$$

avec
$A = -b/(2*a),$
$B = Ts*b$
$C = +Wdiff* Jap$ pour les passages descendants,
$C = -Wdiff* Jap$ pour les passages montants,
Wdiff étant l'écart de régime de l'arbre (8) primaire entre le rapport (RI) initial et le rapport (RF) final,
Ts étant le temps de synchronisation fixé,
Jap étant l'inertie des pièces tournantes soumises au couple de synchronisation, Jap étant calculée en fonction du rapport (RF) final à synchroniser,
b étant le couple de synchronisation par unité d'effort qui dépend des caractéristiques géométriques du synchroniseur (18),
a étant la pente de montée en effort, la valeur de a étant figée et est fonction de la capacité du synchroniseur (18) et de son actionneur.

2.   Procédé selon la revendication 1, **caractérisé en ce que** :

- le temps (Ts) de synchronisation est mémorisé à l'intérieur d'une table établissant la correspondance entre des temps (Ts) de synchronisation prédéterminés et des conditions de changement de rapport identifiées,
- ce temps (Ts) étant sélectionné dans le tableau en fonction des conditions du changement de rapport du véhicule pour passer du rapport (RI) initial au rapport (RF) final.

3.   Procédé selon la revendication 1 ou 2, **caractérisé en ce que** :

- les conditions de changement de rapport correspondent aux régimes de changement de rapport ou à l'enfoncement de la pédale d'accélérateur

4.   Procédé selon l'une des revendications 1 à 3, **caractérisé en ce que** pour calculer l'écart de régime (Wdiff) entre le rapport initial et le rapport final :

- à l'instant de la demande du changement de rapport, on mesure le régime de l'arbre (7) primaire et le régime de l'arbre (8) secondaire, et
- à partir des rapports de démultiplication du rapport (RI) initial et du rapport (RF) final, on calcule l'écart (Wdiff) de régime entre ce rapport (RI) initial et ce rapport (RF) final.

5.   Procédé selon l'une des revendications 1 à 4, **caractérisé en ce que** :

- le changement de rapport de vitesse est commandé par le conducteur et/ou par le mode automatique de changement de rapport.

**Fig. 1**

**Fig. 2**

31 — vitesse arbre primaire au top de passage

32 — vitesse arbre secondaire au top de passage

35 — Démultiplications -rapport RI -rapport RF

37 — Calcul écart de régime Wdiff

38 — Mémoire calculateur 21: + tableau des temps de synchronisation cibles (Ts) + capacité en couple des synchroniseurs (b)

Wdiff

Ts,b

38.1

| Régime initial de passage [Tr/min] | Temps de synchronisation (Ts) [ms] |
|---|---|
| 3000 | 100 |
| 4000 | 80 |
| 5000 | 70 |
| 6000 | 60 |

39 — Calcul effort de synchronisation maximal $F_{synmax}$

$F_{synMax}$

40 — Pilotage synchroniseur; -Pente de montée en effort (a) -Effort maximal ($F_{synMax}$)

| Enfoncement pédale [%] | Temps de synchronisation (Ts) [ms] |
|---|---|
| 10 | 100 |
| 20 | 80 |
| 30 | 70 |
| 40 | 60 |

38.2

41 — Génération de la commande $F_{syn}$ de pilotage optimale du synchroniseur

**Fig. 3**

Vitesse arbre primaire

WI

Wdiff

WF

0

t0    t1        t2        t

**Fig. 4**

Effort de synchronisation $F_{syn}$

$F_{synMax}$

a

0

t0    t1        t2        t

Office européen
des brevets

**RAPPORT DE RECHERCHE EUROPEENNE**

Numéro de la demande

EP 08 30 5095

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 775 325 A (NEW VENTURE GEAR INC [US]) 27 août 1999 (1999-08-27) * page 13, ligne 20 - ligne 25; figure 4a * ----- | 1 | INV. F16H61/02 |
| A | EP 1 197 685 A (AISIN AI CO LTD [JP]) 17 avril 2002 (2002-04-17) * alinéa [0012] * * alinéa [0089] * ----- | 1 | |
| A | EP 0 976 955 A (AISIN AI CO LTD [JP]) 2 février 2000 (2000-02-02) * alinéa [0051] * ----- | 1 | |

|  | DOMAINES TECHNIQUES RECHERCHES (IPC) |
|---|---|
|  | F16H |

Le présent rapport a été établi pour toutes les revendications

| Lieu de la recherche | Date d'achèvement de la recherche | Examinateur |
|---|---|---|
| La Haye | 15 juillet 2008 | Goeman, Frits |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 08 30 5095

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-07-2008

| Document brevet cité au rapport de recherche | | Date de publication | Membre(s) de la famille de brevet(s) | | Date de publication |
|---|---|---|---|---|---|
| FR 2775325 | A | 27-08-1999 | DE | 19907141 A1 | 26-08-1999 |
| | | | GB | 2338761 A | 29-12-1999 |
| | | | IT | MI990301 A1 | 16-08-2000 |
| | | | US | 6145398 A | 14-11-2000 |
| EP 1197685 | A | 17-04-2002 | JP | 2002122230 A | 26-04-2002 |
| | | | US | 2002043119 A1 | 18-04-2002 |
| EP 0976955 | A | 02-02-2000 | DE | 69913614 D1 | 29-01-2004 |
| | | | DE | 69913614 T2 | 23-09-2004 |
| | | | JP | 3313327 B2 | 12-08-2002 |
| | | | JP | 2000046176 A | 18-02-2000 |
| | | | US | 6164149 A | 26-12-2000 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2799256